# EUROPÄISCHE PATENTSCHRIFT

(11) **EP 1 046 564 B1**
(45) Veröffentlichungstag und Bekanntmachung des Hinweises auf die Patenterteilung: **19.11.2003**
(21) Anmeldenummer: 00108362.5
(22) Anmeldetag: 17.04.2000
(51) Int. Cl.: B60T 13/66, B60T 17/22, B60L 15/32, H04L 12/40

(54) **Bremssystem für einen Zug**
Railway brake system
Système de freinage pour train ferroviaire

(30) Priorität: 22.04.1999 DE 19918407
(43) Veröffentlichungstag der Anmeldung: 25.10.2000
(73) Patentinhaber: DB Cargo AG, 55116 Mainz (DE)
(72) Erfinder: Gralla, Dietmar, Dr.-Ing., 32425 Minden (Westf) (DE); Witte, Stefan, Dr.-Ing., 32425 Minden (Westf) (DE); Heinz, Sebastian, 32423 Minden (Westf) (DE)

(56) Entgegenhaltungen:
- EP-A- 0 084 883
- WO-A-98/26958
- US-A- 5 813 635
- EMAUS B D: "ASPECTS AND ISSUES OF MULTIPLE VEHICLE NETWORKS" SAE TECHNICAL PAPER SERIES, SOCIETY OF AUTOMOTIVE ENGINEERS, WARRENDALE, PA, US, 1993, Seiten 79-94, XP002062363 ISSN: 0148-7191

## Beschreibung

Die Erfindung betrifft ein Bremssystem für einen Zug mit den im Oberbegriff des Anspruchs 1 genannten Merkmalen.

Bremssysteme für Züge sind bekannt. So sind beispielsweise Druckluftbremssysteme bekannt, bei denen über eine durch den gesamten Zug führende Hauptluftleitung an den einzelnen Fahrzeugen des Zuges angeordnete pneumatische Bremseinrichtungen ansteuerbar sind. Je nach herrschendem Druck in der Hauptluftleitung befinden sich die Bremseinrichtungen im gelösten Zustand oder im Bremszustand. Bei einer gewollten Abbremsung des Zuges kann ein Zugführer über ein sogenanntes Führerbremsventil das Druckniveau in der Hauptluftleitung absenken, so daß die Bremsen anlegen. Bei einer ungewollten Zugtrennung, beispielsweise durch Versagen einer mechanischen Kupplung zwischen Fahrzeugen des Zuges, wird die Hauptluftleitung unterbrochen (abgerissen), so daß ein sofort auftretender Druckabfall in der Hauptluftleitung zum Anlegen der pneumatischen Bremseinrichtungen führt. Bei dieser Zwangsbremsung (Schnellbremsung) wird sofort die volle Bremskraft ausgelöst, so daß an den Bremspartnern (zum Beispiel Bremsbelag/Bremsscheibe) ein sehr hoher Verschleiß auftritt. Bei dieser Schnellbremsung ist weiterhin nachteilig, daß die getrennten Zugteile mit sehr hohen längsdynamischen Kräften beaufschlagt sind. Insbesondere, wenn der Zug aus relativ niedriger Geschwindigkeit einer Schnellbremsung unterzogen wird, besteht die Gefahr des Entgleisens. Ferner besteht die Gefahr des Auflaufens eines hinteren Zugteiles auf einen vorderen Zugteil durch unterschiedliche Bremskraftverteilung. Ein weiterer Nachteil besteht in der Möglichkeit des Blockierens der Räder durch die Zwangsbremsung, so daß es zur Ausbildung von sogenannten Flachstellen (Unrundheiten) an den Rädern kommen kann.

Ferner sind Bremssysteme bekannt, bei denen über die gesamte Länge des Zuges eine elektrische Steuerleitung geschaltet ist, über die pneumatische Bremseinrichtungen auslösende Magnetventile ansteuerbar sind. Bei Anliegen einer Spannung über die elektrische Steuerleitung sind die Bremseinrichtungen gelöst. Bei einem Spannungsabfall, entweder gewollt über einen Zugführer oder ungewollt bei einer Zugtrennung, lösen die Magnetventile die Bremseinrichtungen aus, so daß ebenfalls eine Zwangsbremsung (Schnellbremsung) eingeleitet wird. Hierbei treten die gleichen hohen mechanischen Verschleißerscheinungen auf.

Ferner ist bekannt, in Zügen ein Datenkommunikationssystem einzusetzen, bei dem über einen Zugbus stellwerterzeugende und stellwertumsetzende Systemkomponenten miteinander kommunizieren können. Stellwerterzeugende Systemkomponenten sind hierbei einem Master oder einem Masterbus zugeordnet, der über ein Gateway an den Zugbus angekoppelt ist. Derartige stellwerterzeugende Systemkomponenten sind beispielsweise in Triebfahrzeugen, Steuerwagen oder dergleichen angeordnet. Stellwertumsetzende Systemkomponenten können jeweils über einen Slavebus und ein Gateway oder über ein Fahrzeugsteuergerät an den Zugbus angekoppelt sein. Die stellwertumsetzenden Systemkomponenten besitzt in der Regel jedes Fahrzeug (Ausnahme Meßfahrzeug oder dergleichen) des Zuges. Stellwerterzeugende Systemkomponenten sind beispielsweise Antriebssteuerungen, Bremssteuerungen oder dergleichen zum aktiven Führen des Zuges. Stellwertumsetzende Systemkomponenten sind beispielsweise Antriebe, Bremsen oder dergleichen, die entsprechend den über den stellwerterzeugenden Systemkomponenten gegebenen Befehlen reagieren. Um eine eindeutige Steuerung über das Datenkommunikationssystem zu gewährleisten, wird einem Fahrzeug des Zuges - in der Regel einem Triebfahrzeug oder Steuerwagen - eine Master-Funktion zugeordnet. Alle weiteren Fahrzeuge des Zuges erhalten eine Slave-Funktion.

Aus US 8 813 635 ist ein Bremssystem bekannt, das eine Vorrichtung zur Erkennung einer Zugtrennung aufweist. Hierbei ermittelt jedes Fahrzeug des Zuges seine Geschwindigkeit und übermittelt diese einem bestimmten Fahrzeug des Zuges - in der Regel das führende Triebfahrzeug - dem eine Master-Funktion zugeordnet ist. Das Fahrzeug mit der Master-Funktion vergleicht die gemeldeten Geschwindigkeiten und meldet ab einer bestimmten Differenz eine Zugtrennung. Wird eine Zugtrennung erkannt, so werden die getrennten Zugteile unabhängig voneinander derart abgebremst, dass eine Kollision zwischen den beiden Zugteilen vermieden wird. Nachteil der Lösung ist, dass lediglich eine Vorrichtung beschrieben wird, mit deren Hilfe eine Zugtrennung erkannt wird. Die auf die erkannte Zugtrennung folgenden durchzuführenden Maßnahmen werden nur kurz erwähnt, jedoch nicht weiter ausgeführt.

Der Erfindung liegt die Aufgabe zugrunde, ein Bremssystem der gattungsgemäßen Art zu schaffen, mit dem in einfacher Weise eine sichere und möglichst verschleißarme Bremsung bei ungewollter Zugtrennung durchführbar ist.

Erfindungsgemäß wird diese Aufgabe durch ein Bremssystem mit den im Anspruch 1 genannten Merkmalen gelöst. Dadurch, daß bei einer ungewollten Trennung des Zuges in wenigstens zwei Zugteile in den Zugteilen, die nicht die Master-Funktion ausübenden aktiven stellwerterzeugenden Systemkomponenten aufweisen, jeweils Komponenten eines in Fahrtrichtung des Zuges vorne angeordneten Slave-Fahrzeugbusses oder Fahrzeugsteuergerätes jedes Zugteiles die stellwerterzeugende Funktion für das Bremssystem übernehmen, wird vorteilhaft erreicht, daß - nur für den Fall der ungewollten Zugtrennung - jeder einzelne Zugteil des ehemaligen Zuges zumindest für die Bremsfunktion stellwerterzeugende Systemkomponenten aktiviert hat. Durch eine derartige Ausbildung des Bremssystems wird insbesondere vorteilhaft möglich, eine Bremsung der einzelnen Zugteile durch dynamisch wirkende Betriebsbremseinrichtungen durchzuführen. Durch das Vorhandensein wenigstens einer stellwerterzeugenden Systemkomponente für das Bremssystem in jedem der Zugteile sind sogenannte Hilfsmaster-Funktionen möglich, so daß eine Ansteuerung der Betriebsbremseinrichtungen möglich wird. Die Vollbremsung (Betriebsbremsung) wird beispielsweise von Wirbelstrombremsen, definierte Ansteuerung der Druckluftbremsen. und weiterer denkbarer Bremseinrichtungen möglich. In jedem Fall wird vermieden, daß durch eine sofortige ausgelöste Schnellbremsung (Zwangsbremsung) durch die Druckluftbremseinrichtungen ein übermäßiger Verschleiß zwischen den Reibpartnern der Bremsanlage eintritt. Durch die definierte Vollbremsung jedes einzelnen Zugteils können diese sicher zum Stehen gebracht werden. Auch wird insbesondere möglich, langsam fahrende Zugteile so definiert (sanft) abzubremsen, so daß deren Entgleisungsrisiko reduziert ist. Durch das definierte Abbremsen, quasi durch den eigentlichen Master, der in wenigstens einem der Zugteile vorhanden ist, und durch die Hilfsmaster in jedem der abgeteilten Zugteile, in denen der eigentliche Master nicht mehr vorhanden ist, werden ferner hohe längsdynamische Kräfte innerhalb der Zugteile vermieden. Neben einer verringerten mechanischen Beanspruchung wird hierdurch auch das Entgleisungsrisiko reduziert.

Bevorzugt ist vorgesehen, daß ein erster (vorderer) Zugteil des ehemaligen Zuges eine Vollbremsung erfährt, während der wenigstens eine weitere Zugteil eine Schnellbremsung erfährt.,Hierdurch wird vorteilhaft vermieden, daß hintere Zugteile auf vordere Zugteile auflaufen, da diese mit einer höheren Bremsbeschleunigung beaufschlagt werden.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine schematische Konfiguration eines Zuges;
- Figuren 2 bis 6: schematisch verschiedene ungewollte Trennungszustände eines Zuges;
- Figur 7: ein Blockschaltbild für eine Hilfsmaster-Vergabe einer Slave-Systemkomponente und
- Figur 8: ein Ablaufschema zur Hilfsmaster-Vergabe.

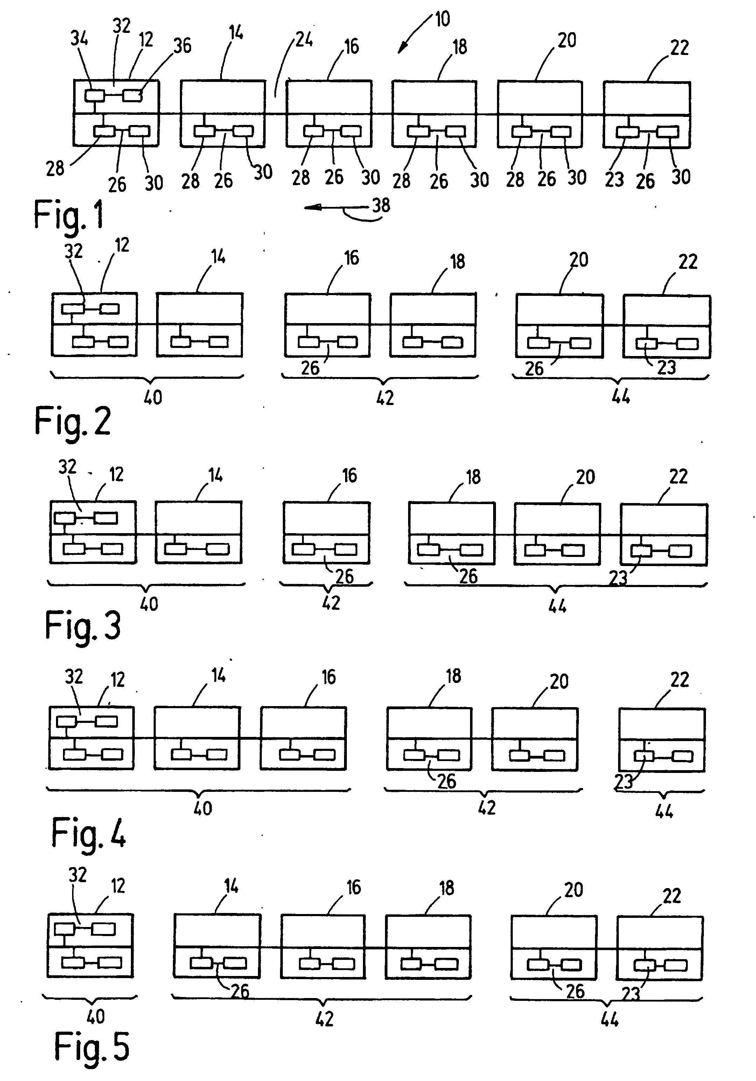

Figur 1 zeigt schematisch einen Zug 10. Der Zug 10 umfaßt ein Triebfahrzeug 12 sowie fünf Wagen (nachfolgend Fahrzeuge) 14, 16, 18, 20 und 22. Nach weiteren; nicht dargestellten Ausführungsbeispielen kann die Konfiguration des Zuges 10 selbstverständlich auch anders gewählt sein. So können beispielsweise weniger oder mehr Fahrzeuge oder mehr als ein Triebfahrzeug im Zug 10 zusammengestellt sein. Die Fahrzeuge des Zuges 10 sind über im einzelnen nicht dargestellte mechanische Kupplungen miteinander verbunden. Ferner kann eine durchgehende Luftleitung vorgesehen sein, über die pneumatische Bremseinrichtungen in noch zu erläuternder Weise ansteuerbar sind.

Die Fahrzeuge 12, 14, 16, 18, 20, 22 des Zuges 10 sind über einen Zugbus 24 miteinander verbunden. Der Zugbus 24 kann beispielsweise ein CAN-Bus, ein Funkbus oder dergleichen sein. Die Fahrzeuge 12, 14, 16, 18, 20 besitzen jeweils ein fahrzeuginternes Fahrzeugbussystem 26, das über jeweils einen Gateway 28 an den Zugbus 24 gekoppelt ist. Das Fahrzeug 22 besitzt ein Fahrzeugsteuergerät 23, das an den Zugbus 24 gekoppelt ist. Es können auch mehrere Fahrzeuge ein Fahrzeugsteuergerät 23 anstelle des Fahrzeugbussystems 26 aufweisen.

An die Fahrzeugbussysteme 26 beziehungsweise das Fahrzeugsteuergerät 23 sind stellwertumsetzende Systemkomponenten 30 angeschlossen. Die Systemkomponenten 30 können beispielsweise Antriebseinrichtungen, Bremseinrichtungen oder dergleichen sein. Dies sind in jedem Fall Komponenten, die infolge empfangener Befehle Aktionen ausführen. Dies können auch Komponenten sein, die Informationen über Betriebszustände liefern. Für die Erläuterung der Ausführungsbeispiele wird angenommen, daß es sich bei den Systemkomponenten 30 um Bremseinrichtungen handelt.

Das Triebfahrzeug 12 besitzt ein weiteres Fahrzeugbussystem 32, das über ein Gateway 34 mit dem Zugbus 24 gekoppelt ist. An das Fahrzeugbussystem 32 sind primär stellwerterzeugende Systemkomponenten 36 angeschlossen. Die Systemkomponenten 36 sind in der Lage, aus Vorgaben eines Triebfahrzeugführers oder eines elektronischen Steuersystems Befehle zum Führen des Zuges 10 zu geben. Für die Erläuterung des Ausführungsbeispiels wird angenommen, daß es sich bei den Systemkomponenten 36 um Einrichtungen zum Geben von Bremsbefehlen für den Zug 10 handelt.

Für den Normalbetrieb des Zuges 10 wird über die stellwerterzeugenden Systemkomponenten 36 eine Initialisierung des Datenkommunikationssystems des Zuges 10 (Zugtaufe) durchgeführt. Hierdurch übernimmt das Fahrzeugbussystem 32 eine Master-Funktion für den Zugbus 24, während die Fahrzeugbussysteme 26 beziehungsweise beziehungsweise die Fahrzeugsteuergeräte 23 jeweils eine Slave-Funktion übernehmen. Der Austausch der Daten beziehungsweise Signale erfolgt über die Gateways 34 beziehungsweise 28 oder das Fahrzeugsteuergerät 23. Für die Funktion des Datenkommunikationssystems ist wichtig, daß innerhalb des Zuges 10 nur ein Fahrzeugbussystem 32 eine Master-Funktion aktiv übernimmt. Im Falle eines Bremsbefehls werden über die stellwerterzeugenden Systemkomponenten 36 entsprechende Bremsbefehle generiert und über den Zugbus 24 den einzelnen stellwertumsetzenden Systemkomponenten 30 übermittelt. Diese führen daraufhin eine Bremsung durch. Diese Bremsung kann beispielsweise darin bestehen, daß über einzelne, nicht dargestellte Ventile eine definierte Entlüftung von Bremszylindern der pneumatischen Bremseinrichtungen in den jeweiligen Fahrzeugen erfolgen kann. Ferner können zusätzlich beispielsweise Wirbelstrombremsen angesteuert werden. Eine angenommene Fahrtrichtung des Zuges ist entsprechend dem Pfeil 38 angenommen.

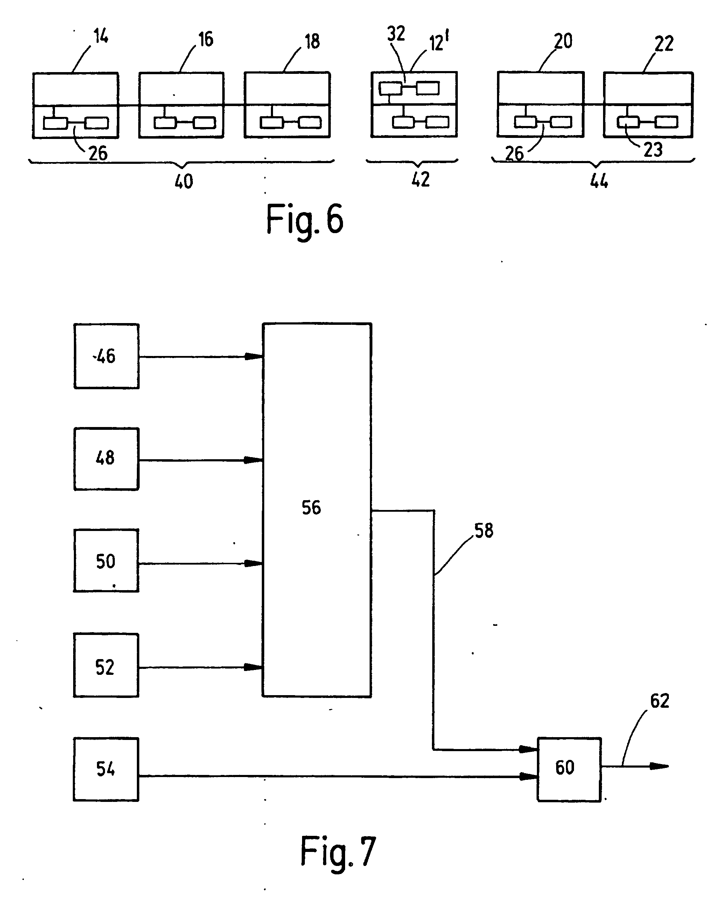

Anhand der Figuren 2 bis 6 werden verschiedene Konfigurationen des Zuges 10 gezeigt, die bei einer angenommenen ungewollten Zugtrennung auftreten könnten. Selbstverständlich sind weitere Konfigurationen möglich. Gleiche Teile wie in Figur 1 sind jeweils mit gleichen Bezugszeichen versehen und nicht nochmals erläutert. In jedem der Beispiele wurde angenommen, daß eine Auftrennung des Zuges 10 in drei Zugteile 40, 42 beziehungsweise 44 erfolgte. Gemäß Figur 2 besteht der Zugteil 40 aus dem Triebfahrzeug 12 und dem Wagen 14, der Zugteil 42 aus den Fahrzeugen 16 und 18 und der Zugteil 44 aus den Fahrzeugen 20 und 22. Gemäß Figur 3 besteht der Zugteil 40 aus dem Triebfahrzeug 12 und dem Fahrzeug 14, der Zugteil 42 aus dem Fahrzeug 16 und der Zugteil 44 aus den Fahrzeugen 18, 20 und 22. Gemäß Figur 4 besteht der Zugteil 40 aus dem Triebfahrzeug 12 sowie den Fahrzeugen 14 und 16, der Zugteil 42 aus den Fahrzeugen 18 und 20 und der Zugteil 44 aus dem Fahrzeug 22. Gemäß Figur 5 besteht der Zugteil 40 aus dem Triebfahrzeug 12, der Zugteil 42 aus den Fahrzeugen 14, 16 und 18 und der Zugteil 44 aus den Fahrzeugen 20 und 22. In Figur 6 ist eine Zugäufteilung angenommen, die von einer etwas anderen Ausgangskonfiguration des Zuges 10 ausgeht. Hier ist das Triebfahrzeug 12 innerhalb des Zugverbundes angeordnet, so daß der Zugteil 40 aus den Fahrzeugen 14, 16 und 18, der Zugteil 42 aus dem Triebfahrzeug 12' und der Zugteil 44 aus den Fahrzeugen 20 und 22 besteht.

Durch das erfindungsgemäße Bremssystem ist nunmehr vorgesehen, daß im Falle einer Zugtrennung jeder Zugteil 40, 42 und 44 eine, durch das Datenkommunikationssystem aktiv beeinflußte Bremsung.bis zum Stillstand aller Zugteile 40, 42, 44 erfährt.

In den Zugteilen (Zugteil 40 gemäß Figur 2 bis 5, beziehungsweise Zugteil 42 gemäß Figur 6) wird die Bremsung durch das die Master-Funktion innerhalb des Zuges 10 innehabende Fahrzeugbussystem 32, also über die stellwerterzeugenden Systemkomponenten 36, eingeleitet.

In den Zugteilen (Zugteile 42 und 44 gemäß Figur 2 bis 5, beziehungsweise Zugteile 40 und 44 gemäß Figur 6) wird die Bremsung durch die Slave-Fahrzeugbussysteme 26 oder das Fahrzeugsteuergerät 23 übernommen, das in Fahrtrichtung 38 jeweils an der Spitze der entstandenen Zugteile 42 beziehungsweise 44 (in Figur 6 Zugteil 40) angeordnet ist. Während der Initialisierung des Datenkommunikationssystems bei der Zusammenstellung des Zuges (Zugtaufe) im Ausgangszustand des Zuges 10 ist die Ermittlung der Fahrzeugreihung im Zugverband 10 eine abzuarbeitende Routine. Diese Fahrzeugreihung steht allen Fahrzeugbussystemen und Fahrzeugsteuergeräten beziehungsweise den daran angeordneten Systemkomponenten als Information zur Verfügung. Durch diese vorhandene Information kann bei der Trennung des Zuges 10 durch jeweils noch verbundene Fahrzeuge sofort erkannt werden, wieviel Fahrzeuge zu dem jeweiligen Zugteil 40, 42, 44 gehören, und ob es in Fahrtrichtung 38 vor- beziehungsweise nachfolgende Fahrzeuge gibt. Hat das im jeweiligen Zugteil 40, 42, 44 vorne angeordnete Fahrzeug erkannt, daß es die Bremssteuerung zu übernehmen hat, erfolgt eine Hilfsmaster-Funktionsvergabe an das Fahrzeugbussystem 26 beziehungsweise Fahrzeugsteuerungssystem 23 des. jeweils vorneliegenden Fahrzeugs der einzelnen Zugteile. Somit wird sichergestellt, daß innerhalb der jeweiligen Zugteile genau eine Master-Funktion - hier jetzt Hilfsmaster-Funktion - über das nur noch in Teilstücken vorliegende Datenkommunikationssystem zur aktiven Beeinflussung der Bremsung erfolgen kann. Diese Hilfsmaster steuern und regeln alle zu dem jeweiligen Zugteil 40, 42 beziehungsweise 44 gehörenden stellwertumsetzenden Systemkomponenten 30, die die Bremseinrichtungen beeinflussen.

Die Bremssteuerung erfolgt derart, daß der vorneliegende Zugteil 40 eine Vollbremsung (Betriebsbremsung) erfährt, während die nachfolgenden Zugteile 42, 44 eine Schnellbremsung erfahren. Hierdurch kommen die hinteren Zugteile schneller zum Stehen und können somit nicht auf den vorderen Zugteil auflaufen.

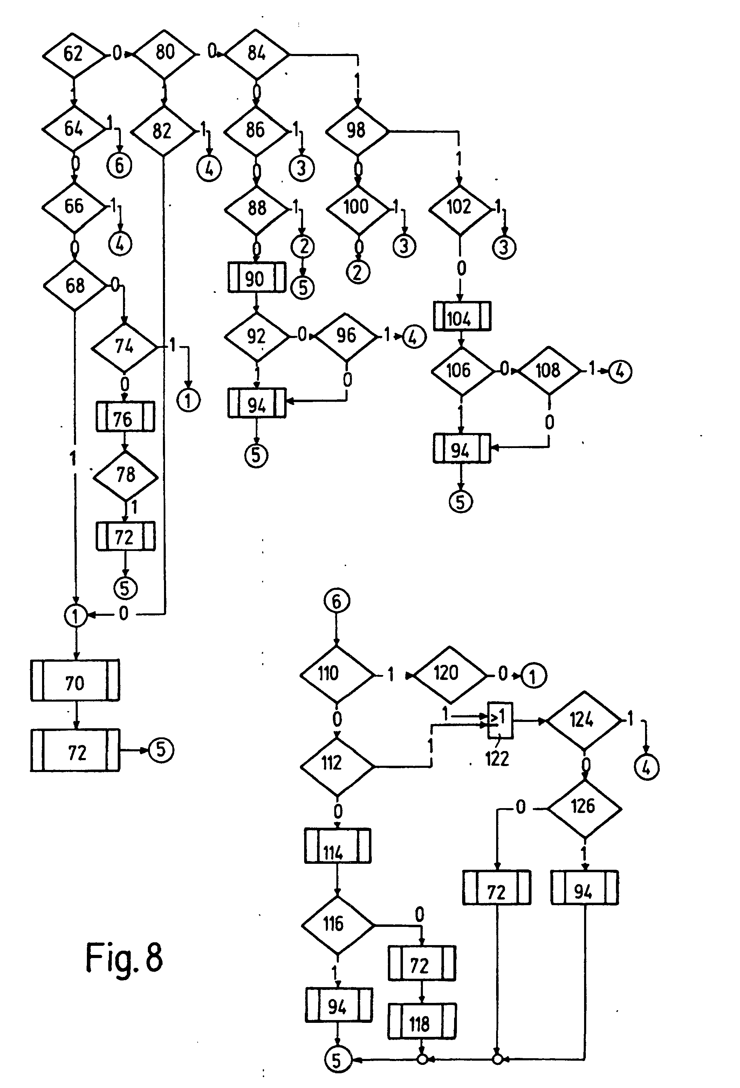

Die Hilfsmaster-Funktionsvergabe an das in den jeweiligen Zugteilen 40, 42, 44 vorneliegende Fahrzeugbussystem 26 beziehungsweise Fahrzeugsteuergerät 23 erfolgt entsprechend dem in Figur 7 gezeigten Blockschaltbild beziehungsweise dem in Figur 8 gezeigten Ablaufplan. Die Gateways 28 und das Fahrzeugsteuergerät 23 verfügen über im einzelnen nicht dargestellte elektronische Komponenten, wie Mikroprozessoren, Speicherelemente oder dergleichen, mittels denen eine intelligente Signalver- beziehungsweise -bearbeitung durchgeführt werden kann. Bestandteil der Signalverarbeitung ist die Abfrage der Informationen 46, 48, 50, 52 und 54. Die Information 46 beinhaltet, daß von den jeweiligen Gateways 28 - infolge der Zugtrennung - von dem Master-Fahrzeugbussystem 32 keine Signale mehr empfangen werden. Die Information 48 beinhaltet, daß von dem letzten Fahrzeug des Zuges 10, hier Fahrzeug 22, kein Signal mehr empfangen wird.

Dieses Signal des letzten Fahrzeugs innerhalb des Zuges 10 dient als sogenannte Zugschlußkontrolle und ist über den Zugbus 24 an sich gemäß des Abfragezyklus ständig verfügbar. Die Information 50 beinhaltet, daß eine durch den Zug 10 geführte elektrische Energieversorgung keine Bordspannung mehr bereitstellt. Schließlich beinhaltet die Information 52, daß über den Zugbus 24 keine Kommunikation, das heißt Datenaustausch, stattfindet. Diese Informationen 46, 48, 50 und 52 werden logisch einer Schaltmatrix 56 zugeführt, so daß am Ausgang der Schaltmatrix 56 ein Signal 58 anliegt, wenn eine entsprechende Auswertung der Informationen 46, 48, 50 oder 52 vorliegt. Das Ausgangssignal 58 wird einem UND-Glied 60 zugeführt. An einem weiteren Eingang des UND-Gliedes 60 liegt die Information 54 an, die beinhaltet, daß das jeweilige Fahrzeug kein einzelnes Triebfahrzeug 12 ist. Hierdurch wird klar, daß das Fahrzeug keine stellwerterzeugenden Systemkomponenten 36 aufweist, die die Bremsung übernehmen könnten. Eine Verknüpfung des Signals 58 mit der Information 54 führt zu einem Ausgangssignal 62 des UND-Gliedes 60, das das Entscheidungssignal ist, daß das jeweilige Fahrzeugbussystem 26 beziehungsweise das Fahrzeugsteuergerät 23 in seinem Zugteil die Hilfsmaster-Funktion zu übernehmen hat.

Figur 8 zeigt einen Ablaufplan, der die Abfrageroutine der Schaltmatrix 56 in den Gateways 28 beziehungsweise das Fahrzeugsteuergerät 23 verdeutlicht. Diese Abfrageroutine wird in vorgebbaren Zeitintervallen fortlaufend wiederholt und führt zu der Feststellung, ob eine Zugtrennung vorliegt und für den Fall, daß eine Zugtrennung vorliegt, welche Komponenten der jeweiligen Zugteile die Hilfsmaster-Funktion für die Bremssteuerung zu übernehmen haben. In dem Ablaufplan sind die Antworten auf die Fragen mit 0 für "nein" und 1 mit "ja" bezeichnet.

Zunächst erfolgt die Abfrage 62, ob die jeweilige Komponente bereits selbst die Master-Funktion im Zug 10 innehat. Bei "ja" erfolgt die Abfrage 64, mittels der die Anordnung des Masters innerhalb des Zuges 10 überprüft wird. Die Abfrage 64 beinhaltet, ob die laufende Nummer des aktuellen Masters größer als 1 und kleiner als die Gesamtzahl der Fahrzeuge im Zug 10 ist. Bei "nein" folgt die Abfrage 66, mit der gefragt wird, ob das letzte Fahrzeug des Zuges 10 beziehungsweise dessen Zugschlußsignal gehört wird. Wird die Abfrage 66 mit "ja" beantwortet, wird die Entscheidung ④ getroffen, die beinhaltet, daß eine Trennung des Zuges 10 nicht vorliegt. Wird die Abfrage 66 mit "nein" beantwortet, folgt die Abfrage 68, ob das laufende Fahrzeug 2 gehört wird. Wird diese Frage mit "ja" beantwortet, wird die Entscheidung ① getroffen, die beinhaltet, daß der aktive Master des Zuges 10 Hilfsmaster in dem jeweiligen Zugteil ist. Über die Aktion 70 wird dann eine Betriebsbremsung 72 (Vollbremsung) durchgeführt, bis das Ergebnis ⑤ eintritt, das bedeutet, der jeweilige Zugteil wird auf eine Geschwindigkeit v = 0 km/h abgebremst.

Wird die Abfrage 68 mit "nein" beantwortet, folgt die Abfrage 74, die beinhaltet, ob das vorletzte Fahrzeug des Zuges 10 gehört wird. Wird die Abfrage 74 mit "ja" beantwortet, folgt die Entscheidung ①, das heißt, der Master übernimmt die Hilfsmaster-Funktion in dem jeweiligen Zugteil bis zur Abbremsung ⑤. Wird die Abfrage 74 mit "nein" beantwortet, erfolgt zunächst ein Selbsttest 76, dessen Ergebnis 78 ergibt, daß alles in Ordnung ist, erfolgt wiederum die Betriebsbremsung 72 bis zur Abbremsung ⑤.

Ergibt die Abfrage 62, daß das Gateway 28 beziehungsweise das Fahrzeugsteuergerät 23 nicht selbst die Master-Funktion innehat, erfolgt die Frage 80, ob der Master des Zuges 10 gehört wird. Bei "ja" erfolgt die Abfrage 82, ob das letzte Fahrzeug beziehungsweise das Zugschlußsignal des Zuges 10 gehört wird. Bei "nein" liegt das Ergebnis ① vor und die Betriebsbremsung 72 wird bis zur Abbremsung ⑤ durchgeführt. Wird die Abfrage 82 mit "ja" beantwortet, wird das Ergebnis ④ festgestellt, das heißt, es liegt keine Zugtrennung vor.

Wird in der Abfrage 80 der Master nicht gehört, erfolgt die Abfrage 84, ob das letzte Fahrzeug beziehungsweise das Zugschlußsignal des Zuges 10 gehört wird. Bei "nein" folgt Abfrage 86, die beinhaltet, ob ein unmittelbar vorheriges Fahrzeug innerhalb des Zuges 10 gehört wird. Bei "ja" fällt die Entscheidung ③, das heißt, das aktuelle Gateway 28 beziehungsweise Fahrzeugsteuergerät 23 übernimmt nicht die Hilfsmaster-Funktion im jeweiligen Zugteil. Wird die Abfrage 26 mit "nein" beantwortet, folgt die Abfrage 88, die beinhaltet, ob ein dem aktuellen Fahrzeug nachfolgendes Fahrzeug gehört wird. Wird diese Frage mit "ja" beantwortet, folgt die Entscheidung ②, die beinhaltet, daß das aktuelle Gateway 28 beziehungsweise das Fahrzeugsteuergerät 23 die Hilfsmaster-Funktion übernimmt und eine Schnellbremsung des jeweiligen Zugteiles bis zur Abbremsung ⑤ übernimmt. Wird die Abfrage 88 mit "nein" beantwortet, erfolgt ein Selbsttest 90, dessen Ergebnis 92 ergibt, ob es ein Einzelfahrzeug ist oder nicht. Ergibt das Ergebnis 92 "ja", wird die Schnellbremsung 94 ausgelöst, die zur Abbremsung ⑤ führt. Ergibt das Ergebnis 92 "nein", erfolgt die Abfrage 96, ob das jeweilige Gateway 28 beziehungsweise Fahrzeugsteuererät 23 eine Energieversorgung erhält. Wird die Frage mit "ja" beantwortet, folgt die Entscheidung ④, das heißt, es liegt keine Zugtrennung vor. Wird die Abfrage 36 mit "nein" beantwortet, erfolgt die Schnellbremsung 94 zur Abbremsung ⑤.

Ergibt die Abfrage 84, daß das letzte Fahrzeug beziehungsweise Zugschlußsignal gehört wird, erfolgt die Abfrage 98, ob das Gateway 38 beziehungsweise das Fahrzeugsteuergerät 23 selbst im letzten Fahrzeug des Zuges 10 ist. Bei "nein" folgt Abfrage 100, die feststellt, ob ein unmittelbar vorhergehendes Fahrzeug gehört wird. Ergibt die Abfrage 100 "nein", wird die Aktion ② ausgelöst, das heißt, das Gateway 28 beziehungsweise das Fahrzeugsteuergerät 23 übernimmt die Hilfsmaster-Funktion und löst die Schnellbremsung bis zur Abbremsung ⑤ aus. Wird die Abfrage 100 mit "ja" beantwortet, wird die Aktion ③ ausgelöst, das heißt, dieses Gateway 28 beziehungsweise Fahrzeugsteuergerät 23 wird kein Hilfsmaster im jeweiligen Zugteil.

Ergibt die Abfrage 98, daß das Fahrzeug letztes Fahrzeug des Zuges ist, so folgt die Abfrage 102, die beinhaltet, ob das unmittelbar vorhergehende Fahrzeug des Zuges 10 gehört wird. Bei "ja" folgt die Aktion ③, das heißt, das jeweilige Gateway 28 beziehungsweise Fahrzeugsteuergerät 23 wird kein Hilfsmaster. Ergibt die Abfrage 102 "nein", erfolgt ein Selbsttest 104 mit dem Ergebnis 106, das beinhaltet, ob das jeweilige Fahrzeug ein Einzelfahrzeug ist. Bei "ja" erfolgt die Schnellbremsung 94 bis zur Abbremsung ⑤. Bei "nein" erfolgt die Abfrage 108, ob das jeweilige Fahrzeug eine Energieversorgung erhält. Bei "ja" erfolgt die Entscheidung ④, das heißt, es liegt keine Zugtrennung vor. Bei "nein" wird die Schnellbremsung 94 bis zur Abbremsung ⑤ ausgelöst.

Ergibt die Abfrage 64 "ja", folgt die Abfrage 110, die beinhaltet, ob das unmittelbar nachfolgende Fahrzeug nach dem die Masterfunktion innehabenden Fahrzeug gehört wird. Bei "nein" folgt Abfrage 112, ob ein unmittelbar vorhergehendes Fahrzeug gehört wird. Bei "nein" erfolgt ein Selbsttest 114 mit dem Ergebnis 116, daß das den aktiven Master beinhaltende Fahrzeug ein Einzelfahrzeug ist. Bei "ja" folgt die Schnellbremsung 94 bis zum Abbremsen ⑤. Bei "nein" erfolgt die Betriebsbremsung 72 mit entsprechender Meldung 118 an den Fahrzeugführer und anschließende Abbremsung ⑤.

Ergibt die Abfrage 110 "ja", folgt die Abfrage 120, ob das unmittelbar vorhergehende Fahrzeug gehört wird. Bei "nein" fällt die Entscheidung ① und die Aktion 70 wird ausgelöst, das heißt, der aktive Master übernimmt die Hilfsmaster-Funktion im entstandenen Zugteil und führt die Betriebsbremsung 72 bis zur Abbremsung ⑤ aus. Die Abfragen 112 und 120 werden über ein ODER-Glied 122 verknüpft, das heißt, die Abfrage 112 oder die Abfrage 120 ist positiv, so daß dann die Abfrage 124 folgt, die beinhaltet, ob das Zugschlußsignal vorhanden ist. Bei "ja" erfolgt die Entscheidung ④, das heißt, es liegt keine Zugtrennung vor. Bei "nein" folgt die Abfrage 126, ob ein Zugteil fehlt. Bei "nein" wird die Betriebsbremsung 72 bis zur Abbremsung ⑤ und bei "ja" die Schnellbremsung 94 bis zur Abbremsung ⑤ vorgenommen.

Durch diesen erläuterten Ablauf der Schaltmatrix 56 werden die unterschiedlichen möglichen Systeme und Randbedingungen berücksichtigt. Insbesondere bei unterschiedlicher Anordnung der Master-Funktion innerhalb des Zuges 10 bei Normalbetrieb können so die einzelnen bei einer. Zugtrennung entstehenden Zugteile die entsprechenden Hilfsmaster vergeben. Insbesondere wird hierdurch erreicht, daß jeweils der erste vordere Zugteil nach Zugtrennung eine Betriebsbremsung erfährt, während die nachfolgenden Zugteile eine Schnellbremsung erfahren. Berücksichtigung findet ferner, daß bei einer Zugtrennung zumindest der letzte Zugteil des ehemaligen Zuges noch ein Zugschlußsignal empfängt, während die anderen Zugteile dieses nicht mehr empfangen. Hieraus ergeben sich auch unterschiedliche Abfrageroutinen zur Hilfs-mastervergabe. Ferner kann berücksichtigt werden, ob während der Zugtrennung oder im Normalbetrieb Einzelfahrzeuge gegeben sind, die eine entsprechende Zugtrennung erkennen und die Betriebsbremsung oder Schnellbremsung auslösen.

## Patentansprüche

1. Bremssystem für einen Zug, der aus wenigstens zwei Fahrzeugen besteht, die über ein Datenkommunikationssystem miteinander verbunden sind, wobei das Datenkommunikationssystem einen Zugbus umfaßt, wenigstens ein Fahrzeug aktiv stellwerterzeugende Systemkomponenten als Master aufweist, die an den Zugbus angekoppelt sind, und jedes Fahrzeug stellwertumsetzende Systemkomponenten als Slave aufweist, die an den Zugbus gekoppelt sind, **dadurch gekennzeichnet, daß** bei einer ungewollten Trennung des Zuges (10) in wenigstens zwei Zugteile (40, 42, 44), innerhalb der Zugteile (40, 42, 44), die nicht die aktiven stellwerterzeugenden Systemkomponenten (36) aufweisen, jeweils die in Fahrtrichtung (38) des Zuges (10) vorne angeordnete Systemkomponente (23; 28) jedes Zugteiles (40, 42, 44) hilfsweise die stellwerterzeugende Funktion für das Bremssystem des Zugteile (40, 42, 44) als Hilfs-Master übernimmt.

2. Bremssystem nach Anspruch 1, **dadurch gekennzeichnet, daß** durch die Systemkomponenten (23; 28) eine Bremsung der Zugteile (40, 42, 44) auslösbar ist.

3. Bremssystem nach Anspruch 2, **dadurch gekennzeichnet, daß** ein in Fahrtrichtung (38) vorderster Zugteil (40) eine Betriebsbremsung erfährt.

4. Bremssystem nach einem der vorhergehenden Ansprüche, **dadurch gekennzeichnet, daß** in Fahrtrichtung (38) hintere Zugteile (42; 44) eine Schnellbremsung erfahren.

5. Bremssystem nach einem der vorhergehenden Ansprüche, **dadurch gekennzeichnet, daß** in Gateways (28) beziehungsweise Fahrzeugsteuergeräten (23), über die die stellwertumsetzenden Systemkomponenten (30) an den Zugbus (24) gekoppelt sind, ständig eine Routine abgearbeitet wird, die die ungewollte Zugtrennung erkennt und die Hilfs-Master-Vergabe festlegt.

6. Bremssystem nach Anspruch 5, **dadurch gekennzeichnet, daß** durch die Gateways (28) beziehungsweise Fahrzeugsteuergeräte (23) abgefragt wird, ob Signale eines aktiven Master-Fahrzeugbussystems (32) empfangen werden, ob vom letzten Fahrzeug (22) ein Zugschlußsignal empfangen wird, ob eine elektrische Energieversorgung des Zuges (10) besteht und ob über den Zugbus (24) ein Daten- und Informationsaustausch stattfindet und bei einer dieser vorliegenden Informationen ein Signal (58) generiert wird, und dieses Signal (58) mit einer Information (54) verknüpft wird, ob das Gateway (28) oder das Fahrzeugsteuergerät (23) in einem Fahrzeug (12; 14; 16; 18; 20; 22) angeordnet ist, das keine stellwerterzeugenden Systemkomponenten (36) aufweist.

## Claims

1. A brake system for a train that consists of at least two vehicles that are connected to one another via a data communication system, wherein the data communication system comprises a train bus, wherein at least one vehicle contains a master in the form of system components that actively generate control values and are coupled to the train bus, and wherein each vehicle contains a slave in the form of system components that react to control values and are coupled to the train bus,
**characterized in that**,
during an unintentional separation of the train (10) into at least two train parts (40, 42, 44), system components (23; 28) of each train part (40, 42, 44) which are arranged forward viewed in the driving direction (38) of the train (10) respectively take over the auxiliary master function of generating control values for the brake system of the train part (40, 42, 44) in the train parts (40, 42, 44) that are not equipped with the active system components (36) that generate control values.

2. The brake system according to Claim 1, **characterized in that** the system components (23; 28) are able to trigger a braking maneuver of the train parts (40, 42, 44).

3. The brake system according to Claim 2, **characterized in that** the front train part (40) viewed in the driving direction (38) executes a service brake braking maneuver.

4. The brake system according to one of the preceding claims, **characterized in that** rear train parts (42; 44) viewed in the driving direction (38) execute an emergency braking maneuver.

5. The brake system according to one of the preceding claims, **characterized in that** a routine is continuously executed in gateways (28) or vehicle control devices (23) that couple the system components (30) for reacting to control values to the train bus (24), wherein said routine detects an unintentional train separation and defines the allocation of the auxiliary master function.

6. The brake system according to Claim 5, **characterized in that** the gateways (28) or vehicle control devices (23) inquire whether or not signals of an active master vehicle bus system (32) are received, whether or not a train termination signal is received from the last vehicle (22), whether or not the train (10) is supplied with electric energy and whether or not an exchange of data and information takes place via the train bus (24), wherein a signal (58) is generated based on the obtained information, and wherein this signal (58) is linked with information (54) as to the fact whether or not the gateway (28) or the vehicle control device (23) is arranged in a vehicle (12; 14; 16; 18; 20; 22) that does not contain any system components (36) that generate control values.

## Revendications

1. Système de freinage pour train, qui consiste en au moins deux véhicules qui sont reliés l'un à l'autre par un système de communication de données, le système de communication de données englobant un bus de train, au moins un véhicule présentant des composantes de système générant activement des valeurs de réglage qui sont accouplées au bus de train, et chaque véhicule présentant en tant qu'asservi des composantes de système convertissant des valeurs de réglage,
**caractérisé en ce que**
qu'en cas d'une séparation non intentionnelle du train (10) en au moins deux parties de train (40, 42, 44) parmi les parties de train (40, 42, 44) qui ne présentent pas les composantes de système actives générant des valeurs de réglage (36), respectivement la composante de système (23 ; 28) de chaque partie de train (40, 42, 44) disposée à l'avant dans le sens de circulation (38) du train (10) prend en charge à titre auxiliaire la fonction de génération de valeurs de réglage pour le système de freinage de la partie de train (40, 42, 44) en tant que maître auxiliaire.

2. Système de freinage selon la revendication 1, **caractérisé en ce qu'**un freinage des parties de train (40, 42, 44) peut être déclenché par les composantes de système (23 ; 28).

3. Système de freinage selon la revendication 2, **caractérisé en ce qu'**une partie de train située la plus à l'avant (40) dans le sens de circulation (38) subit un freinage normal.

4. Système de freinage selon l'une quelconque des revendications précédentes, **caractérisé en ce que** les parties de train situées à l'arrière (42 ; 44) dans le sens de circulation (38) subissent un freinage rapide.

5. Système de freinage selon l'une quelconque des revendications précédentes, **caractérisé en ce qu'**on suit constamment dans les passerelles (28) ou appareils de commande de véhicules (23) par l'intermédiaire desquels les composantes de système convertissant des valeurs de réglage (30) sont accouplés au bus de train (24), une routine qui reconnaît la séparation non intentionnelle du train et fixe la prescription de maître auxiliaire.

6. Système de freinage selon la revendication 5, **caractérisé en ce qu'**il est demandé par les passerelles (28) ou les appareils de commande de véhicules (23) si des signaux d'un système actif de bus de véhicule maître (32) sont reçus, si un signal de fin de train est reçu du dernier véhicule (22), s'il existe une alimentation en énergie électrique du train (10) et si un échange de données et d'informations a lieu par l'intermédiaire du bus de train (24) et, en cas de présence de l'une de ces informations, un signal (58) est généré, et ce signal (58) est rattaché à une information (54) précisant si la passerelle (28) ou l'appareil de commande de véhicules (23) est disposé dans un véhicule (12 ; 14 ; 16 ; 18 ; 20 ; 22) qui ne présente pas de composantes de système générant des valeurs de réglage (36).
